Europäisches Patentamt

European Patent Office

Office européen des brevets

(19)

(11) Veröffentlichungsnummer: **0 184 605**
A2

(12) **EUROPÄISCHE PATENTANMELDUNG**

(21) Anmeldenummer: 85105541.8

(22) Anmeldetag: 07.05.85

(51) Int. Cl.⁴: **B 01 J 2/28,** B 01 J 32/00

(30) Priorität: 19.05.84 DE 3418748

(43) Veröffentlichungstag der Anmeldung: 18.06.86
Patentblatt 86/25

(84) Benannte Vertragsstaaten: **BE DE FR GB IT NL**

(71) Anmelder: **BAYER AG, Konzernverwaltung RP
Patentabteilung, D-5090 Leverkusen 1 Bayerwerk (DE)**

(72) Erfinder: **Kyri, Hans, Dr., Gerstenkamp 5,
D-5000 Koeln 80 (DE)**
Erfinder: **Becker, Wolf, Dr., An den Buchen 30,
D-5000 Koeln 80 (DE)**
Erfinder: **Eichenhofer, Kurt Wilhelm, Dr.,
Paul-Klee-Strasse 52, D-5090 Leverkusen (DE)**

(54) Verfahren zur Herstellung kieselsäurereicher poröser Formkörper sowie deren Verwendung.

(57) Die vorliegende Erfindung betrifft ein Verfahren zur Herstellung poröser Formkörper auf der Basis von Kieselsäure durch Rollgranulierung oder Extrudieren plastischer Gemische, bestehend aus einem pulverförmigen Feststoff und einer flüssigen Komponente, wobei der pulverförmige Feststoff aus gefällter und getrockneter feinteiliger Kieselsäure besteht und die flüssige Komponente ein alkalisches Kieselsol ist, Trocknen und Glühen sowie die Verwendung der auf diese Weise erhaltenen porösen Formkörper.

EP 0 184 605 A2

BAYER AKTIENGESELLSCHAFT       5090 Leverkusen, Bayerwerk
Konzernverwaltung RP
Patentabteilung            St/Ke-c   18. Mai 1984


Verfahren zur Herstellung kieselsäurereicher poröser
Formkörper sowie deren Verwendung

_____


Die vorliegende Erfindung betrifft ein Verfahren zur
Herstellung poröser Formkörper auf der Basis von Kieselsäure durch Rollgranulierung oder Extrudieren plastischer Gemische, bestehend aus einem pulverförmigen
Feststoff und einer flüssigen Komponente, wobei der
pulverförmige Feststoff aus gefällter und getrockneter feinteiliger Kieselsäure besteht und die flüssige
Komponente ein alkalisches Kieselsol ist, Trocknen
und Glühen sowie die Verwendung der auf diese Weise
erhaltenen porösen Formkörper.

Katalysatorträger sind poröse Festkörper, die als Gerüstsubstanz für die Tränkung mit katalytisch wirksamen Massen dienen. An Katalysatorträger werden in mehrfacher Hinsicht besondere Anforderungen gestellt. Die
Gerüstsubstanz darf keine katalytischen Nebenwirkungen
entfalten. Sie soll nicht mit der durch Tränkung aufgebrachten katalytisch wirksamen Masse reagieren oder
diese in ihrer Wirkung verändern. Es muß außerdem eine
Porenstruktur vorhanden sein, welche eine gleichmäßige

Le A 22 724

Beladung durch Tränken ermöglicht und später eine rasche Gasdiffusion von der Granalienoberfläche zu den aktiven Zentren im Inneren der Granalien oder umgekehrt gewährleistet. Schließlich wird eine mechanische Festigkeit verlangt, die auch nach dem Tränken unter Prozeßbedingungen erhalten bleiben muß. Härte und Abriebsbeständigkeit spielen insbesondere bei Katalysatoren für das Fließbettverfahren eine entscheidende Rolle. Festbettkatalysatoren müssen eventuelle Wärmebewegungen beim Aufheizen oder Abkühlen der Katalysatorschüttung ohne wesentliche Verstaubung überstehen.

Für das Fließbettverfahren werden ausschließlich Katalysatoren in Kugelform mit einem Durchmesser von weniger als 3 mm eingesetzt. Im Festbett verwendet man aus Gründen der einfacheren Herstellung zylinderförmige Katalysatoren unterschiedlicher Dicke.

Vom Standpunkt der chemischen Beständigkeit, insbesondere gegenüber sauren Medien, stellen Katalysatorträger aus möglichst reiner Kieselsäure die beste Lösung dar. Aber auch Systeme, die sowohl Kieselsäure als auch Aluminiumoxid enthalten, entsprechen häufig den Ansprüchen an die chemische Beständigkeit von Katalysatorträgern.

Nach dem Stand der Technik werden poröse Katalysatorträger auf der Basis von Kieselsäure und Kaolin durch Tropfgranulierung hergestellt. So sind aus der DE-PS 1 926 564 abriebfeste Fließbettkatalysatorträger be-

Le A 22 724

kannt, deren Trägermaterial auf Basis gefällter Kieselsäuren unter Mitverwendung von Tonmineralien hergestellt werden. Diese Trägermaterialien werden durch Suspendieren von Kieselsäurefüllstoffen und Tonmineralien unter Zusatz von Magnesiumoxid in einem wäßrigen stabilen Kieselsol hergestellt. Die gelierfähige Mischung wird in einer mit Wasser nicht mischbaren Flüssigkeit zu Tropfen der gewünschten Größe verteilt. Die erstarrten Gelkugeln werden von der organischen Flüssigkeit abgetrennt und nach dem Trocknen und Kalzinieren bei Temperaturen von 500°C bis 1.000°C geglüht. Nach der Kalzination erfolgt eine Säurebehandlung, um das in dem Trägermaterial vorhandene Aluminium möglichst weitgehend zu entfernen.

Nachteilig an diesem Verfahren ist dessen Störanfälligkeit und der erhebliche Aufwand, da dieses Verfahren nur in Räumen mit entsprechendem Feuerschutz durchgeführt werden kann.

Bei entsprechenden Granulierungen mit Wasserglas, Säuren oder sauren Salzen (DE-PS 10 936 336; DE-PS 896 189, DE-AS 1 187 588, DE-AS 1 767 754) müssen die Granulierprodukte durch einen aufwendigen Waschprozeß von den löslichen Salzen befreit werden.

Ein weiterer Nachteil der geschilderten Verfahren ist darin zu sehen, daß in ihnen Fehlchargen einen Totalverlust darstellen, da der Prozeß der Gelierung irreversibel ist.

Le  A 22 724

Ein weiterer Nachteil besteht in der Einschränkung der Korngröße des Granulates auf die Tropfengröße beim Eintragen in das organische Trägermedium.

Gemäß der DE-OS 2 935 914 wird ein plastisches Gemisch aus einem pulverförmigen Oxid und einer überwiegend Wasser enthaltenden flüssigen Komponente durch Extrudieren geformt, dann werden diese Formlinge zerkleinert und in einem besonderen Arbeitsgang zu runden kugeligen Körpern umgeformt.

Ein Nachteil der so hergestellten Formlinge ist ihre ungenügende Druckfestigkeit. Außerdem ist das zweistufige Verfahren zu ihrer Herstellung sehr aufwendig.

In Tablettenpressen hergestellte Formlinge müssen zur endgültigen Verfestigung getrocknet und geglüht werden. Insbesondere beim Trocknen tritt dabei eine starke Schrumpfung ein. Um die Ausbildung von Schrumpfrissen zu vermeiden, wurde vorgeschlagen, die Granalien vor dem Trocknen mehrere Stunden zu lagern (DE-OS 2 625 705). Diese Lagerung ist besonders bei Granalien mit höheren $SiO_2$-Konzentrationen nötig. Beim Gelieren von Kieselsol entsteht ein Gel, welches beim Trocknen durch Rißbildung in kleine Bruchstücke zerfällt. Ein großer Teil dieser Schrumpfrisse entsteht im Inneren der Formkörper und ist beim Trocknen und Glühen weitgehend unsichtbar. Diese Schrumfprisse führen erst bei der mechanischen Belastung der fertigen Formkörper zum Bruch.

Le A 22 724

Bei der großen technischen Bedeutung von Katalysatoren oder von porösen Katalysatorträgern auf der Basis feinteiliger Kieselsäure oder ihrer Mischungen mit Aluminiumoxid, besteht ein dringender Bedarf nach einem leistungsfähigen problemlosen Verfahren zur Herstellung von Granalien, deren mechanische Festigkeit und deren Abriebbeständigkeit auch den extremen Ansprüchen eines Fließbettes entspricht. Insbesondere ist ein solches Verfahren erwünscht für Granulate die mittels Kieselsol als Bindemittel hergestellt werden.

Die Rollgranulierung zur Herstellung kugelförmiger Agglomerate aus feinteiligen Feststoffen ist ein wirtschaftlich günstiges Verfahren und wird technisch in großem Umfang ausgeübt. Nachteilig ist jedoch die eingangs erwähnte Rißbildung, die insbesondere bei Verwendung von Kieselsolen mit höheren $SiO_2$ Konzentrationen zwischen 15 und 35 Gew.-% $SiO_2$ auftritt.

Granulate die mit einem Kieselsol mit weniger als 15 Gew.-% $SiO_2$ hergestellt wurden, zeigen bei mechanischer Belastung nur geringe Anzeichen von Rißbildung. Ihre Abriebsbeständigkeit ist wegen der geringen Festigkeit der porösen Struktur aber unbefriedigend.

Andererseits zeigen Granalien, die mit einem Kieselsol mit 30 Gew.-% $SiO_2$ hergestellt wurden, eine hohe Festigkeit ihrer porösen Struktur, jedoch einen starken Zerfall durch Granalienbruch an den inneren Schrumpfrissen.

Le A 22 724

Die Aufgabe der vorliegenden Erfindung besteht somit darin, ein Verfahren zur Herstellung poröser Formkörper auf der Basis von Kieselsäure zur Verfügung zu stellen, welches die geschilderten Nachteile nicht aufweist.

Überraschenderweise wurde gefunden, daß man die vorzeitige Erhärtung der Oberfläche der Granalien und die damit verursachte Ausbildung von Schrumpfrissen vermeiden kann, wenn man bei der Herstellung der Granalien Cellulosefasern zusetzt.

Gegenstand der vorliegenden Erfindung ist somit ein Verfahren zur Herstellung poröser Formkörper auf der Basis von Kieselsäure durch Rollgranulierung oder Extrudieren plastischer Gemische, bestehend aus einem pulverförmigen Feststoff und einer flüssigen Komponente, wobei der pulverförmige Feststoff aus gefällter und getrockneter feinteiliger Kieselsäure besteht und die flüssige Komponente ein alkalisches Kieselsol ist, Trocknen und Glühen, das dadurch gekennzeichnet ist, daß in der flüssigen Komponente faserförmige Cellulose dispergiert ist.

Diese Granulate können bei einer Temperatur von weniger als 100°C ohne Rißbildung getrocknet und anschließend geglüht werden. Insbesondere können nach dem erfindungsgemäßen Verfahren Granulate mit hoher mechanischer Festigkeit hergestellt werden. Perlförmige Granalien, die nach diesem Verfahren hergestellt werden, zeigen

Le A 22 724

einen extrem niedrigen Abriebverlust unter Arbeitsbedingungen, wie sie beim Fließbettverfahren üblich sind.

Bei der üblichen Verfestigung des porösen Gerüstes solcher Granalien durch Glühen bei einer Temperatur von mehr als 500°C verbrennen die Cellulosefasern rückstandslos. Die Wirkung der Cellulosefasern im Sinne der Erfindung liegt vorzugsweise im Temperaturbereich der Trocknung unter 100°C, wo Diffusion und Transport des Wassers weitgehend in Form des flüssigen Wassers ablaufen. Die Trocknung in diesem Temperatubereich muß bis zur Gewichtskonstanz des Systems durchgeführt werden.

Es wurde außerdem gefunden, daß der Zusatz von Cellulosefasern bei der sogenannten Aufbaugranulierung die Schalenbildung zuverlässig verhindert.

Besonders geeignet ist das erfindungsgemäße Verfahren, wenn das alkalische Kieselsol einen Gehalt von 15 bis 35 Gew.-% $SiO_2$ aufweist.

Die für die Vermeidung der Rißbildung notwendige Menge an Cellulosefasern liegt bei 0,1 bis 2,5 Gew.-% der gesamten Rohstoffmischung oder bei 0,2 bis 5,0 Gew.-% des flüssigen Bindemittels. Die Verwendung von Dispergierhilfsmitteln ist beim Dispergieren von Cellulosefasern in alkalisch stabilisiertem Kieselsol nicht notwendig. Faserige Cellulose verteilt sich beim Einrühren in Kieselsol nach kurzer Rührdauer zu einer Suspension, die praktisch vollständig zu Einzelfasern verteilt ist.

Le A 22 724

Bei der Aufbaugranulierung wird in einem Granullerteller durch Zuführung von Feststoff und flüssigem Bindemittel der Durchmesser der kugelförmigen Granalien durch schichtweisen Materialauftrag vergrößert. Es ist ein bekannter Nachteil der Aufbaugranulierung im System feinteiliger Kieselsäure und Kieselsol, daß diese Schichten sich mit der Unterlage nur unvollständig verbinden. Nach dem Trocknen lösen sich diese Schichten unter mechanischer Belastung schalenförmig ab. Ein solches Granulat mit schalenförmigem Aufbau ist als Katalysatorträger unbrauchbar. Die eingebauten Cellulosefasern verhindern die Schalenbildung, indem sie eine partielle Austrocknung der gelartigen Oberfläche verhindern.

Grobkörnige Granulate als Katalysatorträger sind wegen des relativ geringen Strömungswiderstandes für die Herstellung von Festbettkatalysatoren wichtig.

Die Wirkung der Callulosefaser ist bedingt durch ihre gute Wasseraufnahme und die freie Beweglichkeit des von der Cellulose aufgenommenen Wassers. Um den beschriebenen Transport des Wassers in den Granalien zu gewährleisten, werden Fasern bevorzugt, deren Länge mindestens dem halben Durchmesser der gebildeten Granalien entspricht.

Es ist somit eine besonders bevorzugte Verfahrensvariante, daß die faserförmige Cellulose in Mengen von 0,1 bis 2,5 Gew.-%, bezogen auf die Rohstoffmischung, vorliegt und die mittlere Faserlänge mindestens dem halben Durchmesser der Formkörper entspricht.

Le A 22 724

Für die homogene Verteilung der Fasern werden diese in dem flüssigen Bindemittel homogen dispergiert. Als besonders geeignet haben sich Holzschliff, **faserige Zell**stoffpräparate, faserige regenerierte Cellulosen und Baumwolle erwiesen. Ebenso geeignet ist Papierbrei, der aus Cellulosefasern besteht, soweit dieser in dem Bindemittel dispergierbar ist.

Besonders vorteilhaft ist die Dispergierung der Cellulosefasern in einem Kieselsol, das durch Zusatz von Alkalihydroxid oder Alkalisilikatlösung stabilisiert ist und einen pH-Wert von mindestens 10 aufweist. Die beste Stabilisierung des Kieselsols erfolgt durch Kaliumhydroxid oder Kaliwasserglaslösung, wenn das Verhältnis $K_2O:SiO_2$ zwischen 1:20 und 1:200 Gewichtsteilen liegt.

Besonders bevorzugt ist somit ein Verfahren, bei dem die flüssige Komponente zusätzlich einen Gehalt von 0,5 bis 3,5 Gew.-% $K_2O$ aufweist.

Die Herstellung des erfindungsgemäßen Granulates durch Rollgranulierung erfolgt durch intensives Mischen des pulverförmigen Rohstoffanteiles mit dem flüssigen Bindemittel in einem Rührmischer. Besonders geeignet ist dafür ein Rührmischer mit horizontal drehendem Behälter, in dem sich ein exzentrisch drehender Rührer befindet. Es kann jedoch jeder andere Mischer mit Granuliereffekt benutzt werden.

<u>Le A 22 724</u>

Der pulverförmige Rohstoff ist eine gefällte getrocknete und gemahlene Kieselsäure mit einer spezifischen Oberfläche nach BET von 20 bis 300 m²/g. Als pulverförmiger Rohstoff kann erfindungsgemäß ein Gemisch aus gefällter und getrockneter feinteiliger Kieselsäure mit einer tonartigen Substanz wie Ton, Kaolin, Bentonit, Attapulgit oder Hektorit verwendet werden, wobei der Anteil an Kieselsäure wenigstens 50 Gew.-% der Feststoffmischung beträgt.

In einer bevorzugten Ausführungsform des erfindungsgemäßen Verfahrens ist das flüssige Bindemittel ein Kieselsol mit einem Gehalt von 15 bis 35 Gew.-% $SiO_2$ und einem pH-Wert von mehr als 9 oder ein Gemisch von diesem Kieselsol mit KOH-Lösung oder mit Kaliumsilikatlösung. Die gefällte Kieselsäure hat üblicherweise einen Gehalt von mehr als 85 Gew.-% $SiO_2$ und 1 bis 2 Gew.-% $Na_2O$ und einem Wassergehalt, der der Differenz zu 100 % entspricht. Der Alkaligehalt des Kieselsoles wird vorzugsweise durch Vermischen von Kieselsol oder einer wäßrigen Lösung von KoH oder einer wäßrigen Wasserglaslösung eingestellt.

Eine bevorzugte Ausführungsform des erfindungsgemäßen Verfahrens besteht darin, daß der pulverförmige Feststoff neben Kieselsäure und gegebenenfalls tonartiger Substanz noch andere Füllstoffe wie Kieselgur oder Talkum in Anteilen von 0 bis 25 Gew.-% des Feststoffgemisches enthält. Als Zusatz eignet sich auch feinstgemahlener Glimmer.

Le A 22 724

Die Menge an faserförmiger Cellulose soll mindestens 0,2 Gew.-% des flüssigen Bindemittels betragen. Nach oben hin ist die Menge durch die Aufnahmefähigkeit des Bindemittels begrenzt. Bei etwa 5 Gew.-% Cellulose im Bindemittel erreicht diese Mischung wegen der Quellung der Cellulose die Grenze der technischen Verarbeitbarkeit. Gute Ergebnisse sowohl hinsichtlich der Verarbeitbarkeit als auch in der Verminderung der Rißbildung beim Trocknen und Glühen werden mit 0,8 bis 1,5 Gew.-% Cellulose im flüssigen Bindemittel erzielt.

Ohne Einfluß auf das Ergebnis des erfindungsgemäßen Verfahrens kann die zugesetzte tonartige Substanz zusammen mit der faserigen Cellulose gemeinsam in dem flüssigen Bindemittel dispergiert werden. Nicht geeignet als Cellulose sind gemahlene Cellulosen, deren Faserstruktur weitgehend durch den Mahlvorgang zerstört ist. Wenig geeignet sind einige Papiersorten, die sich, infolge der festen Verklebung der Fasern miteinander, nicht mehr zu Einzelfasern dispergieren lassen.

Besonders bevorzugt werden die so erhaltenen feuchten Formlinge bei einer Temperatur von weniger als 100°C bis zur Gewichtskonstanz getrocknet und anschließend bei einer Temperatur zwischen 500°C und 1.000°C geglüht. Ein Überschreiten der Trockentemperatur an den noch feuchten Granalien kann eine teilweise Zerstörung der gebildeten Struktur zur Folge haben.

Le A 22 724

Ein weiterer Vorteil entsteht dadurch, daß das bei der Rollgranulierung hergestellte Granulat nach dem Trocknen auf die gewünschte Kornfraktion gesiebt wird und das Unter- und Überkorn auf eine Feinheit von weniger als 0,1 mm Korngröße vermahlen und dem festen Rohstoffgemisch vor der Verformung zugemischt wird.

Das ausgeschiedene Überkorn und Unterkorn kann nach vorheriger Vermahlung dem pulverförmigen Rohstoffanteil zugemischt werden. Es ist ein besonderer Vorzug des vorliegenden Verfahrens, daß dieses Überkorn und Unterkorn ohne Materialverlust wiederverwendet werden kann.

Die genaue Glühtemperatur für das Granulat wird durch die gewünschte Porenstruktur und die spezifische Oberfläche des Granulates bestimmt.

Die Mischung aus dem pulverörmigen Feststoff und dem flüssigen Bindemittel einschließlich der darin dispergierten faserförmigen Cellulose kann aber auch nach jedem anderen Verfahren in die gewünschte Form gebracht werden, beispielsweise durch Strangpressen oder Verformen auf einer Tablettenpresse.

Insbesondere ist es möglich, ein in einem Rührmischer gebildetes Granulat mit einem Korngrößenbereich bis zu 3 mm auf einem Granulierteller durch kontinuierliche Zugabe von Feststoff und Bindemittel zu Granalien mit größerem Korndurchmesser aufzubauen. Hierbei wurde gefunden, daß in den gebildeten größeren Granalien nicht

Le A 22 724

0184605

nur die Rißbildung sondern auch die sogenannte Schalenbildung zuverlässig vermieden wird.

Nach dem erfindungsgemäßen Verfahren können auch aus Gemischen von feinteiliger gefällter Kieselsäure und Tonen oder tonartigen Substanzen unter Zusatz eines flüssigen Bindemittels, vorzugsweise einem alkalisch stabilisierten Kieselsol, Granalien hergestellt und ohne Rißbildung getrocknet und geglüht werden. Poröse kugelförmige Granalien aus dem System $Al_2O_3-SiO_2$ sind nicht nur hochwertige Katalysatorträger sondern auch selbst wertvolle Katalysatoren in der Petrochemie.

Es besteht insbesondere ein Bedarf an solchen Katalysatoren mit einer hohen Abriebbeständigkeit und hoher Glühbeständigkeit für die Aufheizperiode solcher Katalysatoren, die häufig als Wärmeträger für die endothermen Reaktionen benützt werden. Durch die Unterbindung der Rißbildung bei der Herstellung der Granalien entfällt eine der wichtigsten Ursachen für die unbefriedigende Abriebbeständigkeit solcher Granulate.

Durch Dosierung des $Al_2O_3$-Gehaltes der Granalien kann trotz des Gehaltes an Alkalioxid die poröse Struktur der Granalien soweit stabilisiert werden, daß sie sich auch bei mehrfachem Glühen nicht wesentlich durch Versintern ändert.

Gegenstand der vorliegenden Erfindung ist somit auch die Verwendung der erfindungsgemäß hergestellten porösen Formkörper als Katalysatoren.

Le A 22 724

Gegenstand der Erfindung ist außerdem die Verwendung der erfindungsgemäß hergestellten Formkörper, wobei die porösen Formkörper während oder nach ihrer Herstellung mit einer wäßrigen Lösung einer katalytisch wirksamen Substanz getränkt und gegebenenfalls durch eine geeignete Nachbehandlung aktiviert werden.

Eine besonders bevorzugte Ausführungsform der vorliegenden Erfindung ist die Verwendung der beschriebenen Formkörper als Katalysatoren, wobei die wäßrige Lösung Vanadium (IV) enthält und der so gewonnene Katalysator für die katalytische Oxidation von $SO_2$ eingesetzt wird.

Im folgenden wird die Erfindung beispielhaft erläutert, ohne daß darin eine Einschränkung der Erfindung auf die beispielhafte Durchführung zu sehen ist.

Die in den Beispielen genannten Rohstoffe sind folgende: Durosil®️ ist eine gefällte feinteilige Kieselsäure mit einer spezifischen Oberfläche von 50 m²/g, einem Gehalt von mindestens 85 Gew.-% $SiO_2$, 1 bis 2 Gew.-% $Na_2O$ und einem Wassergehalt, der der Differenz zu 100 Gew.-% entspricht.

Kaolin ist ein handelsüblicher weißer gemahlener Kaolin mit einem Gehalt von ca. 90 Gew.-% Kaolinit.
Seine Analyse entspricht   $Al_2O_3$   36 Gew.-%
                           $SiO2$   46 Gew.-%

Kieselgur ist eine weiße handelsübliche Kieselgur. Bevorzugt wird eine Kieselgur mit einem Anteil von ca. 30 % an runden oder halbmondförmigen Kieselskelletten mit poröser Struktur.

<u>Le A 22 724</u>

Kieselsol ist eine handelsübliche wäßrige Lösung von kolloidaler Kieselsäure mit einem Gehalt zwischen 15 und 35 Gew.-% $SiO_2$. Bevorzugt wird ein Kieselsol mit einem Gehalt von 30 Gew.-% $SiO_2$, dessen Kieselsäure eine spezifische Oberfläche von 300 m²/g hat, wie das Kieselsol 300F/30, Handelsprodukt der Bayer AG.

Kaliwasserglaslösung ist eine wäßrige Lösung von Kaliumsilikat mit einem Verhältnis von $K:SiO_2$ zwischen 1:2 bis 1:4. Bevorzugt wird eine 20 %ige Kaliwasserglaslösung mit einer Dichte von 1,25, mit einem Gehalt von

| | |
|---|---|
| $K_2O$ | 8,1 Gew.-% |
| $SiO2$ | 28,2 Gew.-% |

Für die beschriebenen Beispiele wurde zur Granulierung ein sogenannter Eirichmischer (Bauart Maschinenfabrik Eirich, Hardheim) verwendet.

Der in den Beispielen angegebene Granulierteller ist ein schräg gestellter rotierender Behälter, in welchem ein Feingranulat vorgegeben wird und durch weitere Zugabe von Pulver und flüssigem Bindemittel unter Rotieren eine Kornvergröberung stattfindet.

Die Prüfung der Granalien geschieht in einer Apparatur, die sowohl eine Abriebbeanspruchung als auch eine Prallbeanspruchung auf die zu prüfenden Granalien ausübt und damit den Beanspruchungen der Praxis weitgehend entspricht.

Die Apparatur besteht aus einem äußeren Glasrohr von 50 mm lichter Weite und einer Länge von 400 mm in dem

Le A 22 724

sich ein konzentrisch fixiertes Metallrohr von 7 mm lichter Weite und einer Länge von 385 mm befindet. Das untere Ende des Glasrohres ist durch einen kegelförmigen Ansatz verjüngt. Im Zentrum der Verjüngung befindet sich eine Düse mit einer Öffnung von 2,5 mm, in einem Abstand von 10 mm von der unteren Öffnung des zentralen Metallrohres. Am oberen Ende des Metallrohres befindet sich in einem Abstand von ca. 30 mm ein Prallkegel, der bis auf einen kreisförmigen Schlitz von 1,5 mm das Glasrohr ausfüllt. Der Prallkegel ist zur Füllung der Apparatur abnehmbar. Bei der Prüfung wird die 2,5 mm Düse mit trockener Luft oder einem trockenem Stickstoffstrom von 3,0 Nm³/h beaufschlagt.

Das zu prüfende kugelförmige Granulat wird durch Siebung auf eine Kornfraktion von 1,0 bis 1,6 mm gebracht und davon 50 g in die Apparatur eingetragen. Zur Prüfung muß das Granulat vorher bei 150°C bis zur Gewichtskonstanz getrocknet werden.

Nach dem Einschalten des Stickstoffstromes durch die 2,5 mm Düse wird das Granulat in das zentrale Metallrohr eingeblasen, durchströmt dieses und wird durch den Prallkegel in das Glasrohr zurückgeführt und fällt dann wieder in die kegelförmige Verjüngung des senkrecht stehenden Rohres.

In dem Metallrohr unterliegt das Granulat einer intensiven Abriebbeanspruchung, während es am Prallteller einer Prallbeanspruchung ausgesetzt ist. Der staubförmige Abrieb entweicht durch den Schlitz zwischen Prallteller und Glasrohr.

**Le A 22 724**

Nach einer vorgegebenen Prüfdauer wird das Granulat entnommen, gesiebt und ausgewogen. Der Siebrückstand zwischen 0,8 und 1,6 mm entspricht dem durch den Test nicht zerstörten Material, während der Anteil kleiner als 0,8 mm einschließlich des mit dem Gasstrom ausgetragenen Staubes als Abriebverlust gerechnet wird. Die Erfahrung zeigt, daß für die Beurteilung eines Granulates, als Katalysatorträger oder als getränkter und formierter Katalysator, auf seine Eignung für den Einsatz in einem Fließbett die Prüfdauer auf 16 Stunden auszudehnen ist. Dies ist beispielsweise für Katalysatoren notwendig, die nach der Beladung mit Kaliumpyrosulfat und Vanadiumpentoxid und nach einer Formierung, durch Glühen bei 500°C in einem Strom aus $SO_2$ und Luft, geprüft werden.

Nach diesem Prüfverfahren läßt sich die Existenz von Mikrorissen in dem zu prüfenden Granulat durch das Auftreten von Bruchstücken der Granalien während des Prüfvorganges visuell leicht feststellen. Während bei einem Granulat ohne Mikrorisse der Abriebverlust nach 16 Stunden Prüfdauer unter einem Wert von 25 Gew.-% liegt, wird ein Granulat mit Mikrorissen schon vor Beendigung dieser Prüfung weitgehend zerstört.

Le A 22 724

## Beispiel 1

In einem Eirichmischer von 150 Liter Rauminhalt werden 9 kg Durosil(R) vorgelegt. Es werden 14,6 kg Bindemittel, bestehend aus 13,3 kg 30 %igem Kieselsol 300F/30 und 1,1 kg einer 25 %igen Kaliwasserglaslösung, in welcher 0,17 kg Holzschliff dispergiert sind, zugegeben. Nach ca. 20 Minuten intensiven Rührens ist der Inhalt des Mischers zu einem perlförmig runden Granulat von 0,1 bis 3,0 mm Durchmesser agglomeriert. Es werden 1 kg Durosil zugegeben und der Rührvorgang etwa 2 Minuten fortgesetzt.

Das fertige Granulat wird entnommen und in einem Umlufttrockner bei 90°C bis zur Gewichtskonstanz getrocknet.

Durch Siebung werden etwa 80 % der Gesamtmenge als Kornfraktion zwischen 0,8 und 2,0 mm Korndurchmesser gewonnen. Das Unterkorn und das Überkorn werden zurückgestellt und nach der Vermahlung auf einer Stiftmühle bei einem neuen Ansatz dem Durosil(R) zugesetzt. Die Franktion 0,8 bis 2,0 mm wird 4 Stunden bei 600°C in einem Kammerofen geglüht.

Das geglühte Granulat hat, gemessen an einer Kornfraktion von 1,0 bis 1,6 mm, folgende Eigenschaften:

| | | |
|---|---|---|
| Schüttgewicht | 0,65 | g/cm³ |
| Aufsaugvolumen | 0,56 | cm³/g |
| Bruchhärte | 2,4 | kp/Pellet |
| spez. Oberfläche nach BET | 85 | m²/g |
| Porendurchmesser (im Mittel) | 25 | nm |

Le A 22 724

Beim Abriebtest zeigt dieses Granulat (1,0 bis 1,6 mm) nach 16 Stunden einen Abriebverlust von kleiner als 0,8 mm von 15 Gew.-%.

Das geglühte Granulat besteht aus praktisch reiner Kieselsäure mit etwa 1 Gew.-% Alkalioxid und etwa 3 Gew.-% gebundenem Wasser. Beim Einrühren in Wasser ist kein Kornzerfall festzustellen.

**Beispiel 2**

In einem Eirichmischer von 150 Liter Rauminhalt werden 10 kg Durosil (R) und 2,0 kg Kaolin vorgemischt. Von dieser Mischung werden 1 kg entnommen, um nach Beendigung des Granuliervorganges die entstandenen Granalien oberflächlich abzutrocknen.

Zu den 11 kg Pulvergemisch werden 19,0 kg Bindemittel, bestehend aus 16,0 kg Kieselsol 300F/30 und 2,8 kg einer 25 %igen Kaliwasserglaslösung und 0,17 kg darin dispergierter Zellstoffwatte, zugegeben. Nach 20 Minuten intensiven Rührens ist der Inhalt des Mischers zu einem perlförmig rundem Granulat von 0,1 bis 3,0 mm Durchmesser agglomeriert. Durch Zugabe von 1 kg der Pulvermischung werden die Granalien oberflächlich abgetrocknet.

Das Granulat wird bei 90°C bis zur Gewichtskonstanz getrocknet und dann 2 Stunden bei 900°C geglüht. Gemessen an einer Siebfraktion von 1,0 bis 1,6 mm Korngröße

Le A 22 724

hat das geglühte Granulat folgende Eigenschaften:

| | | |
|---|---|---|
| Schüttgewicht | 0,65 | g/cm³ |
| Aufsaugvolumen | 0,54 | cm³/g |
| Bruchhärte | 3,7 | kp/Pellet |
| spez. Oberfläche nach BET | 53 | m²/g |
| Porendurchmesser | 40 | nm |

Beim Abriebtest in der beschriebenen Apparatur zeigt dieses Granulat nach 16 Stunden einen Abriebverlust von kleiner als 0,8 mm von 12 Gew.-%.

Beim Einrühren in Wasser ist kein Kornzerfall festzustellen. Neben einem Hauptanteil an $SiO_2$ enthält das Granulat noch ca. 2 Gew.-% Alkalioxid, ca. 4,5 Gew.-% $Al_2O_3$ und 2 bis 3 Gew.-% gebundenes Wasser.

**Beispiel 3** (Vergleichsbeispiel)

In dem Eirichmischer des Beispiels 2, werden 10 kg Durosil®und 2 kg Kaolin vermischt. Von dieser Pulvermischung werden 1 kg entnommen und für das Trocknen der Granalien zurückgestellt. Zu 11 kg Pulvermischung werden 16,9 kg Bindemittel, bestehend aus 14,4 kg 30 %igem Kieselsol und 2,5 kg einer 25 %igen Kaliwasserglaslösung gegeben und intensiv vermischt. Nach etwa 20 Minuten Mischdauer bilden sich runde perlförmige Granalien mit einem Durchmesser bis zu 3 mm. Diese werden durch weitere Zugabe der zurückgestelltn Pulvermischung an der Oberfläche abgetrocknet.

Le A 22 724

Dieses fertige Granulat wird bei 90°C getrocknet und dann 2 Stunden bei 900°C geglüht. Gemessen an einer Siebfraktion von 1,0 bis 1,6 mm Korngröße hat das geglühte Granulat folgende Eigenschaften:

| | |
|---|---|
| Schüttgewicht | 0,65 g/cm³ |
| Aufsaugvolumen | 0,57 cm³/g |
| Bruchhärte | 2,7 kp/Pellet |
| spez. Oberfläche | 65 m²/g |

Der Abriebverlust zeigt nach 1 Stunde Prüfdauer 15 Gew.-% Kornanteil unter 0,8 mm. Eine weitere Fortsetzung der Prüfung bis zu den 16 Stunden Prüfdauer des Granulates nach dem erfindungsgemäßen Verfahren ist daher mangels Masse nicht durchführbar.

**Beispiel 3a**   (Vergleichsbeispiel)

In einem Eirichmischer werden wie im Beispiel 2, 10 kg Durosil(R) und 2 kg Kaolin intensiv gemischt. Von dieser Pulvermischung werden 1 kg entnommen und für das Abtrocknen der Granalien zurückgestellt.

Zu 11 kg dieser Pulvermischung werden 16,9 kg eines flüssigen Bindemittels, bestehend aus 14,4 kg 30 %igem Kieselsol und 2,5 kg einer 25 %igen Kaliwasserglaslösung und 0,5 kg darin dispergierter, auf 3 mm Länge geschnittener Glasfaser, zugesetzt. Nach 20 Minuten intensiven Mischens ist der Inhalt des Eirichmischers zu einem perlförmig runden Granulat, mit bis zu 3,5 mm

Le A 22 724

großen Granalien agglomeriert. Durch Zumischen von 1 kg der Pulvermischung aus Kaolin und Durosil [R] wird die Oberflächenfeuchtigkeit der Granalien gebunden.

Das Granulat wird bei 90°C getrocknet und dann bei 850°C 2 Stunden lang geglüht.

Die Kornfraktion von 1,0 bis 1,6 mm entspricht in ihren gemessenen Eigenschaften völlig denjenigen der Granalien aus Beispiel 2 und 3. Die Abriebbeständigkeit mit einem Abriebverlust von 20 Gew.-% Kornanteil kleiner 0,8 mm nach einer Stunde Prüfdauer ist jedoch völlig unzureichend.

**Beispiel 4**

In einem Eirichmischer werden 10 kg Durosil [R] , 2,0 kg Kaolin und 1,1 kg weiße Kieselgur trocken gemischt. 12 kg dieser Mischung werden unter Zusatz von 14,4 kg einer Bindemittelmischung, bestehend aus 13 kg 30 %igem Kieselsol, 1,2 kg einer 25 %igen Kaliwasserglaslösung und 0,15 kg in dieser Lösung dispergierter Zellstoffwatte, durch intensives Mischen granuliert. Die Granalien werden mit etwa 1 kg der Pulvermischung nachgemischt und dadurch an der Oberfläche abgetrocknet. Das Granulat wird bei 90°C bis zur Gewichtskonstanz getrocknet und dann 2 Stunden bei 850°C geglüht. Es hat folgende Eigenschaften:

| | |
|---|---|
| Schüttgewicht | 0,66 g/cm³ |
| Aufsaugvolumen | 0,52 cm³/g |
| Bruchhärte | 3,8 kp/Pellet |

Le A 22 724

| | |
|---|---|
| spez. Oberfläche | 67 m²/g |
| mittlerer Porendurchmesser | 31 nm |

Neben dem Hauptanteil $SiO_2$ enthält das Granulat 4,5 Gew.-% $Al_2O_3$, ca. 1,5 Gew.-% Alkylioxid und ca. 1 Gew.-% gebundenes Wasser.

Beim Abriebversuch in der beschriebenen Apparatur zeigt das Granulat nach 16 Stunden Prüfdauer einen Abriebverlust von 17 Gew.-% als Kornanteil kleiner 0,8 mm. Ein Zerfall des geglühten Granulates in kaltem oder heißem Wasser ist nicht zu beobachten.

## Beispiel 4a

Tränkung des gemäß Beispiel 4 hergestellten Katalysatorträgers mit einer Vanadium (IV)-enthaltenden wäßrigen Lösung.

In einem 3-1-Glaskolben wird eine Lösung der folgenden Komponenten hergestellt:

1400 g Wasser, 275 g $H_2SO_4$, 533 g $K_2SO_4$, 240 g $V_2O_5$. Nach Erwärmen der Lösung auf 50°C wird ein langsamer Strom von 85 g $SO_2$ eingeleitet, bis das gesamte Vanadium zur 4wertigen Stufe reduziert vorliegt.

Die tiefblaue Lösung hat bei Zimmertemperatur eine Dichte von 1,44 g/cm³ und einen Vanadiumgehalt entsprechend 9,5 Gew.-% $V_2O_5$.

Le A 22 724

## Tränkung

Die Tränkung des Trägers erfolgt durch Mischen von 2000 g Träger (Körnung 0,8-2,5 mm) mit 144 g der beschriebenen Tränkelösung, bis diese völlig von dem porösen Träger aufgesaugt ist.

Nach dem Trocknen bei 150°C bis 200°C wird der Katalysator kurz bis 500°C erhitzt und ist dann in dieser Form einsatzbereit.

Eine Formierung in einem Gemisch von Luft mit ca. 1 % $SO_2$, wie dies bei alkalischer Tränkung notwendig ist, entfällt bei dem hier beschriebenen Katalysator.

Der fertige Katalysator hat folgende Eigenschaften.

| | |
|---|---|
| Schüttgewicht | 0,87 g/cm³ |
| Härte (1- 1,6 mm) | 5,0 kp/Pellet |
| Spez. Oberfl. n. BET | 24,0 m²/g |
| Aufsaugvolumen für Toluol | 31 cm³/100 g |

Teilanalyse:

| | |
|---|---|
| $V_2O_5$ | 4,70 Gew.-% |
| $K_2O$ | 6,67 Gew.-% |
| $K_2O : V_2O_5 =$ | 2,75 : 1,0 |

Die Prüfung der katalytischen Wirkung auf die Oxidation von $SO_2$ zu $SO_3$ erfolgt in einem isotherm betriebenen vierstufigen Laborwirbelbett.

<u>Le A 22 724</u>

Gesamtschütthöhe des Katalysators in den 4 Stufen ist 92 cm. Die Strömungsgeschwindigkeit betrug 0,63 ONm³ Gas/Stunde bei einem Rohrquerschnitt von 8,9 cm². Jede der 4 Stufen war mit einer Temperaturregelung versehen.

Das Gasgemisch bestand aus 10 Vol.-% $SO_2$, 10 Vol.-% $O_2$ und 80 Vol.-% $N_2$.

Die Umsetzung wurde nach der vierten Stufe durch Bestimmung des Restgehaltes an $SO_2$ festgestellt. Sie betrug bei 475°C 96,3 % gegenüber einer nach dem thermodynamisch errechneten Gleichgewicht von 96,7 %.

Bei 450°C betrug der Gesamtumsatz nach der vierten Stufe 93,0 %.

**Beispiel 5**

In einem Eirichmischer werden 10 kg Durosil ®und 10 kg Kaolin trocken vermischt. Von dieser Mischung werden 18 kg mit 21 kg eines flüssigen Bindemittels, bestehend aus 17,8 kg 30 %igem Kieselsol, 3,0 kg 25 %igem Kaliwasserglaslösung und 0,2 kg darin dispergierter Zellstoffwatte, versetzt und intensiv gemischt. Der Inhalt des Eirichmischers granuliert innerhalb von etwa 20 Minuten zu einem perlförmigen Granulat mit einer Korngröße bis zu 3 mm Korndurchmesser. Durch Zugabe von 2 kg der ursprünglichen Pulvermischung werden die entstandenen Granalien an der Oberfläche soweit abgetrocknet, daß sie bei der weiteren Handhabung nicht mehr verkleben.

Le A 22 724

Das Granulat wird bei 90°C bis zur Gewichtskonstanz getrocknet und dann 2 Stunden bei 850°C geglüht. Es hat dann, gemessen an einer Kornfraktion von 1,0 bis 1,6 mm folgende Eigenschaften:

| | | |
|---|---|---|
| Schüttgewicht | 0,65 | g/cm³ |
| Aufsaugvolumen | 0,55 | cm³/g |
| Bruchhärte | 3,0 | kp/Pellet |
| spez. Oberfläche | 67 | m²/g |
| Porendurchmesser | 33 | nm |

Der Abriebverlust nach 16 Stunden Prüfdauer beträgt 5,8 Gew.-%, als Kornanteil kleiner 0,8 mm bestimmt.

Das Granulat besteht neben dem Hauptanteil $SiO_2$ aus 14,5 Gew.-% $Al_2O_3$, 2,0 Gew.-% Alkalioxid und ca. 1 Gew.-% gebundenem Wasser.

**Beispiel 6**

In einem Eirichmischer werden 10 kg Durosil®, 2,0 kg weiße Kieselgur und 0,6 kg Bentonit trocken gemischt. 12 kg dieser Mischung werden unter Zusatz von 15,3 kg eines flüssigen Bindemittels, bestehend aus 7,2 kg 30 %igem Kieselsol, 7,2 kg Wasser, 0,7 kg 25 %igem Kaliwasserglaslösung und 0,2 kg darin dispergierter Zellstoffwatte, in dem Eirichmischer granuliert. Die nach 20 Minuten entstandenen Granalien werden durch Zusatz von 0,6 kg der ursprünglichen Pulvermischung an der Oberfläche soweit getrocknet, daß sie bei der weiteren Handhabung nicht mehr verkleben.

**Le A 22 724**

Das Granulat wird bei 90°C getrocknet und 2 Stunden
bei 850°C geglüht.

Das geglühte Granulat hat, gemessen an einer Kornfraktion von 1,0 1,6 mm, folgende Eigenschaften:

Schüttgewicht                     $0,64$ g/cm$^3$
Aufsaugvolumen                    $0,54$ cm$^3$/g
Bruchhärte                        $3,4$ kp/Pellet
spez. Oberfläche                  $13$ m$^2$/g
mittlerer Porendurchmesser        $150$ nm

Der Abriebverlust nach 16 Stunden Prüfdauer beträgt
23 Gew.-% als Kornanteil kleiner 0,8 mm.

Ein nach gleichem Verfahren ohne den Zusatz von Cellulosefasern hergestelltes Granulat zeigt praktisch
das gleiche Eigenschaftsbild, es zerfällt jedoch unter
der Beanspruchung der Abriebsprüfung innerhalb von 3 Stunden vollständig zu einem Pulver mit einer Korngröße von
weniger als 0,8 mm.

## Beispiel 7

Im Eirichmischer werden Granalien mit einer Korngröße
bis zu 3 mm nach dem im Beispiel 6 beschriebenen Verfahren hergestellt. Die noch feuchten Granalien werden
auf einen Granulierteller aufgegeben. Durch gleichmäßige

**Le A 22 724**

und gleichzeitige Zugabe von Pulvermischung und Aufspritzen von flüssigem Bindemittel werden Granalien mit einer Korngröße von ca. 4 mm aufgebaut. Das flüssige Bindemittel mit dem darin dispergierten Cellulosefasern wird mittels einer Zweistoffdüse, mit einer Öffnung von mindestens 4 mm auf den Inhalt des Granuliertellers aufgespritzt. Der Granulierteller kann so schräg eingestellt werden, daß ein Granulat von 4 mm Korngröße als Überlauf erhalten wird.

Das 4 mm Granulat wird bei 90°C getrocknet und 2 Stunden bei 850°C geglüht. Es zeigt folgende Eigenschaften:

| | |
|---|---|
| Schüttgewicht | 0,64 g/cm$^3$ |
| Aufsaugvolumen | 0,55 cm$^3$/g |
| Bruchhärte | 14 kg/Pellet |
| spez. Oberfläche | 16 m$^2$/g |

Die Granalien zeigen beim Zerbrechen keine Schalenbildung und auch keinen Bruch beim Eintragen in kaltem oder heißem Wasser. Eine Abriebsprüfung ist wegen der Korngröße nicht durchführbar.

Beispiel 8 (Vergleichsbeispiel)

Im Eirichmischer werden intensiv gemischt:
10 kg Durosil (R), 2,0 kg Kaolin und 2,4 kg weiße Kieselgur.

Le A 22 724

13,5 kg dieser Pulvermischung werden mit unter Zusatz von 19,7 kg flüssigem Bindemittels, bestehend aus 16,5 kg 30 %igem Kieselsol, 2,9 kg 25 %iger Kaliwasserglaslösung und 0,3 kg darin dispergierten gemahlenen Zellstoffs durch intensives Rühren granuliert. Nach ca. 20 Minuten hat sich ein rundes perlförmiges Granulat mit einer Korngröße bis zu 3 mm gebildet. Dieses Granulat wird durch Zugabe von 0,9 kg der pulverförmigen Rohstoffmischung an der Oberfläche abgetrocknet.

Das Granulat wird bei 90°C bis zur Gewichtskonstanz getrocknet und dann 2 Stunden bei 850°C geglüht.

Die Kornfraktion von 1,0 bis 1,6 mm hat folgende Eigenschaften:

| | |
|---|---|
| Schüttgewicht | 0,66 g/cm$^3$ |
| Aufsaugvolumen | 0,56 cm$^3$/g |
| Bruchhärte | 3,0 kp/Pellet |
| spez. Oberfläche | 67 m$^2$/g |

Der Abriebverlust dieser Granalien, gemessen als Kornanteil kleiner als 0,8 mm, beträgt nach 1 Stunde Prüfung 5,8 und nach 3 Stunden Prüfdauer 14,6 Gew.-%. Das Material ist also trotz des Zusatzes von Cellulose nicht abriebsbeständig, da die Cellulose durch die Vermahlung bis auf eine Faserlänge von 0,05 mm zerkleinert war. Im Gegensatz dazu zeigt die erfindungsgemäß verwendete faserförmige Cellulose eine Faserlänge von mehr als 3 mm.

Le A 22 724

## Patentansprüche

1.  Verfahren zur Herstellung poröser Formkörper auf der Basis von Kieselsäure durch Rollgranulierung oder Extrudieren plastischer Gemische, bestehend aus einem pulverförmigen Feststoff und einer flüssigen Komponente, wobei der pulverförmige Feststoff aus gefällter und getrockneter feinteiliger Kieselsäure besteht und die flüssige Komponente ein alkalisches Kieselsol ist, Trocknen und Glühen, dadurch gekennzeichnet, daß in der flüssigen Komponente faserförmige Cellulose dispergiert ist.

2.  Verfahren gemäß Anspruch 1, dadurch gekennzeichnet, daß das alkalische Kieselsol einen Gehalt von 15 bis 35 Gew.-% $SiO_2$ aufweist.

3.  Verfahren gemäß einem der Ansprüche 1 oder 2, dadurch gekennzeichnet, daß die faserförmige Cellulose in Mengen von 0,1 bis 2,5 Gew.-%, bezogen auf die Rohstoffmischung, vorliegt und die mittlere Faserlänge mindestens den halben Durchmesser der Formkörper entspricht.

4.  Verfahren gemäß einem der Ansprüche 1 bis 3, dadurch gekennzeichnet, daß die flüssige Komponente zusätzlich einen Gehalt von 0,5 bis 3,5 Gew.-% $K_2O$ aufweist.

5.  Verfahren gemäß einem der Ansprüche 1 bis 4, dadurch gekennzeichnet, daß als pulverförmiger Rohstoff ein

**Le A 22 724**

Gemisch aus gefällter und getrockneter feinteiliger Kieselsäure mit einer tonartigen Substanz wie Ton, Kaolin, Bentonit, Attapulgit oder Hektorit verwendet wird, wobei der Anteil an Kieselsäure wenigstens 50 Gew.-% der Feststoffmischung beträgt.

6. Verfahren gemäß einem der Ansprüche 1 bis 5, dadurch gekennzeichnet, daß der pulverförmige Feststoff neben Kieselsäure und gegebenenfalls tonartiger Substanz noch andere Füllstoffe wie Kieselgur oder Talkum in Anteilen von 0 bis 25 Gew.-% des Feststoffgemisches enthält.

7. Verfahren gemäß einem der Ansprüche 1 bis 6, dadurch gekennzeichnet, daß der Alkaligehalt des Kieselsols durch Vermischen von Kieselsol mit einer wäßrigen Lösung von KOH oder einer wäßrigen Kaliwasserglaslösung eingestellt wird.

8. Verfahren gemäß einem der Ansprüche 1 bis 7, dadurch gekennzeichnet, daß die feuchten Formlinge bei einer Temperatur von weniger als 100°C bis zur Gewichtskonstanz getrocknet und anschließend bei einer Temperatur zwischen 500°C und 1000°C geglüht werden.

9. Verfahren gemäß einem der Ansprüche 1 bis 8, dadurch gekennzeichnet, daß das bei der Rollgranulierung hergestellte Granulat nach dem Trocknen auf die

Le A 22 724

gewünschte Kornfraktion gesiebt wird und das Unter- und Überkorn auf eine Feinheit von weniger als 0,1 mm Korngröße vermahlen und dem festen Rohstoffgemisch vor der Verformung zugemischt wird.

10. Verwendung der gemäß einem der Ansprüche 1 bis 9 hergestellten porösen Formkörper als Katalysatoren.

11. Verwendung gemäß Anspruch 10, dadurch gekennzeichnet, daß die porösen Formkörper während oder nach ihrer Herstellung mit einer wäßrigen Lösung einer katalytisch wirksamen Substanz getränkt und gegebenenfalls durch eine geeignete Nachbehandlung aktiviert werden.

12. Verwendung gemäß Anspruch 11, dadurch gekennzeichnet, daß die wäßrige Lösung Vanadium (IV) enthält und der so gewonnene Katalysator für die katalytische Oxidation von $SO_2$ eingesetzt wird.

<u>Le A 22 724</u>